# EUROPEAN PATENT APPLICATION

(11) **EP 2 196 387 A1**
(43) Date of publication of application: **16.06.2010**
(21) Application number: 08021379.6
(22) Date of filing: 09.12.2008
(51) Int. Cl.: B62M 3/08

(54) **A magnetic pedal release and binding structure for vehicles**

(71) Applicant: Lai, Jung-Hung, West District Chiayi City (TW); Lai, Jung-Pin, West District Chiayi City (TW)
(72) Inventor: Lai, Jung-Hung, West District Chiayi City (TW); Lai, Jung-Pin, West District Chiayi City (TW)
(74) Representative: Zeitler - Volpert - Kandlbinder

(57) **Abstract**

The present invention provides a kind of magnetic pedal release and binding structure for vehicles, comprising: at lest one permanent magnet (10), fixed at a preset position on the vehicle pedal plate (11); the permanent magnet (10) is of ferromagnetic material; an attractive binder, comprising a board (21), at least one permanent magnet (22) and a user foot binding structure (24); therein the board defines a top surface and a bottom surface; the permanent magnet is fixed at a preset position on the bottom surface of the board. The permanent magnet (22) is of ferromagnetic material, to match the permanent magnet (10) of the vehicle pedal plate (11) and realize a magnetic binding status. The user foot binding structure (24) is configured on the top surface of the board (21), to bind and fix onto the user's foot or shoe. Meanwhile, the user foot binding structure has a quick release positioner to facilitate shifting between the fixed status and released status. Through such a design, an advancement of practicability in traveling efficiency and safety is realized.

## Description

### BACKGROUND OF INVENTION

### 1. Field of the Invention

The present invention relates generally to a kind of vehicle, and more particularly to a kind of vehicle which has an innovative design of a magnetic pedal release and binding structure.

### 2. Description of Related Art

The present invention mainly features an innovative breakthrough in the pedal structures of such vehicles as bicycles and wheelchairs.

Firstly, as for the pedal structure of bicycles, although the general types of pedals do not have safety problems, the traveling efficiency cannot be improved as the motion of the pedal and crank is only driven by the downside treading force on one side. For other prior-art bicycle pedal structures of mouth type or clamp type, efficiency is improved through the clamping structure configured on the pedal which enables driving of the pedal when the user's foot is lifted. Although the user can get familiar to the release and binding action of such pedal structure through frequent practice, in case of a sudden fall due to emergency, the user's foot may seriously hurt as the user may not react so fast as to release his/her foot from the pedal immediately.

Secondly, as for the pedal structure of wheelchairs, the general types of wheelchair pedals do not have a structure to fix the user's feet, which may therefore slip and fall to the ground. Another prior-art wheelchair pedal provides a lacing structure to fix the user's feet, but the user has to spend some time fastening and releasing the laces when he/her gets into the wheel chair. This is obviously inconvenient.

Thus, to overcome the aforementioned problems of the prior art, it would be an advancement if the art to provide an improved structure that can significantly improve the efficacy.

Therefore, the inventor has provided the present invention of practicability after deliberate design and evaluation based on years of experience in the production, development and design of related products.

### SUMMARY OF THE INVENTION

Firstly: The "magnetic pedal release and binding structure for vehicles" disclosed in the present invention enables the user to enhance traveling efficiency through a unique and innovative design wherein the permanent magnet fixed on the bottom surface of the attractive binder board can magnetically bind with the permanent magnet of the vehicle pedal plate, so that the pedal will be driven no matter the user treads downward or lifts his/her feet.

Secondly: As for the pedal structure of wheelchairs, if the patient's feet or shoes are fixed onto the attractive binder, and magnetically bind with the permanent magnet of the wheelchair pedal, the patient can avoid danger of dragging his/her feet on the ground, and meanwhile, the magnetic absorption and binding status facilitates separation, and make it easier for the patient to gets into and out of the wheelchair. Moreover, in case of emergency, the patient can release his/her feet from the pedal immediately and avoid seriously hurt. Hence, an advancement of practicability in safety is realized.

Although the invention has been explained in relation to its preferred embodiment, it is to be understood that many other possible modifications and variations can be made without departing from the spirit and scope of the invention as hereinafter claimed.

### BRIEF DESCRIPTION OF THE DRAWINGS

FIG. 1 shows an exploded perspective view of a preferred embodiment of the present invention.
FIG. 2 shows a combined sectional view of a preferred embodiment of the present invention.
FIG. 3 shows an example that the attractive binder of the present invention can be bound with the user's shoe externally.
FIG. 4 shows another preferred embodiment of the present invention.
FIG. 5 shows an operating diagram of the present invention.

### DETAILED DESCRIPTION OF THE INVENTION

The features and the advantages of the present invention will be more readily understood upon a thoughtful deliberation of the following detailed description of a preferred embodiment of the present invention with reference to the accompanying drawings.

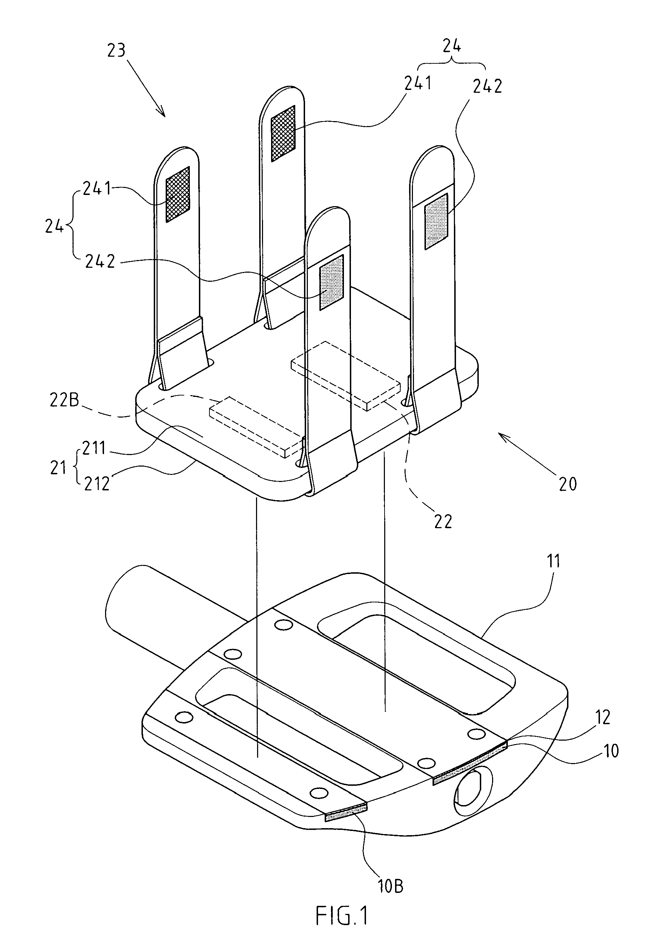

Figures 1, 2 and 3 show a preferred embodiment of the present invention of a magnetic pedal release and binding structure for vehicles. While such an embodiment is for description purposes only, and shall not restrict the types of structure in patent application. Said magnetic pedal release and binding structure for vehicles comprises:
at least one permanent magnet 10, fixed at a preset position on the vehicle pedal plate 11; the permanent magnet 10 is of ferromagnetic material, and the ferromagnetic material can be any of the chemical composition systems of neodymium-iron-boron (nb-fe-b), samarium cobalt -iron (smco-fe), or aluminum nickel cobalt - iron (ainico-fe);
an attractive binder 20, comprising a board 21, at least one permanent magnet 22 and a user foot binding structure 23; therein, the board 21 defines a top surface 211 and a bottom surface 212, and the permanent magnet 22 is configured on the bottom surface 212 of the board 21; the permanent magnet 22 is of ferromagnetic material, and the ferromagnetic material can be any of the chemical composition systems of neodymium-iron-boron (nb-fe-b), samarium cobalt -iron (smco-fe), or aluminum nickel cobalt - iron (alnico-fe); said permanent magnet 22 is configured at a preset position on the bottom surface 212 of the board 21, to match the permanent magnet 10 of the vehicle pedal plate 11 and realize a magnetic binding status; the user foot binding structure 23 is configured on the top surface 211 of the board 21, to bind and fix onto the user's foot or shoe; meanwhile, the user foot binding structure 23 has a quick release positioner 24 to facilitate shifting between the fixed status and released status.

Therein, the permanent magnets 22 of said vehicle pedal plate 11 and attractive binder 20 must match each other to realize the attractive function. And said attractive function shall enable the user to control the relative movement status of the attractive binder 20 and the vehicle pedal plate 11 through a preset force. The preset force can be controlled through design in variation of the flux of the permanent magnet 22. When the force exceeds the preset range of force, the attractive binder 20 will separate from the vehicle pedal plate 11.

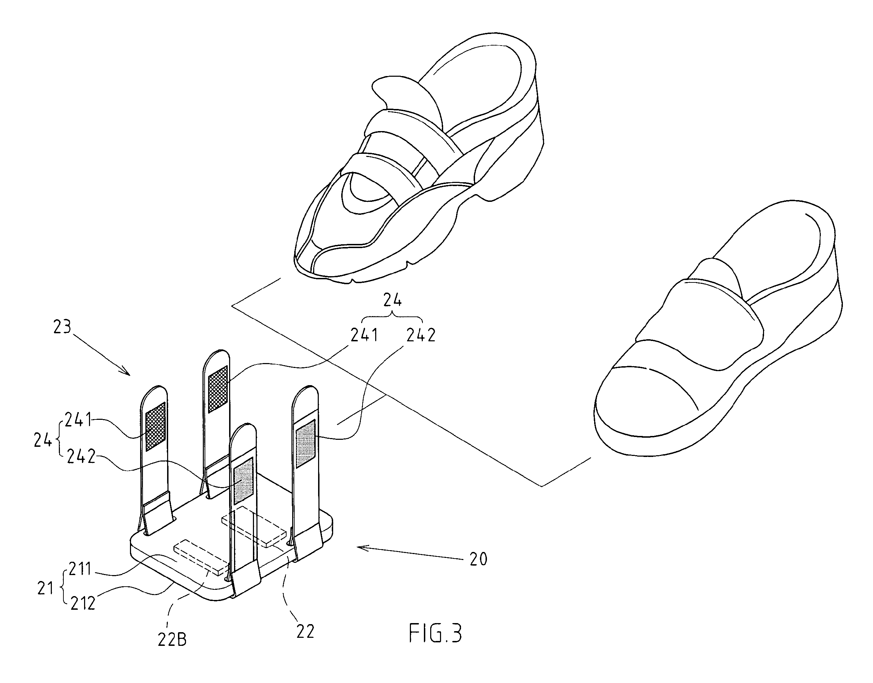

Therein, the quick release positioner 24 of said user foot binding structure 23 can be made up of a male velcro 241 and a female velcro 242. Apart from this, it can be male and female buttons, magnets, or elastic bands (referring to FIG. 3).

Therein, the permanent magnet 10 on the vehicle pedal plate 11 can be configured with an abrasion-proof material 12.

Therein, the permanent magnet 22 of the attractive binder 20 and the permanent magnet 10 of the vehicle pedal plate 11 can be configured with concave and convex parts for clasping, so that the attractive binder 20 and the vehicle pedal plate 11 can be fixed together more stably (Figure of such an embodiment is omitted).

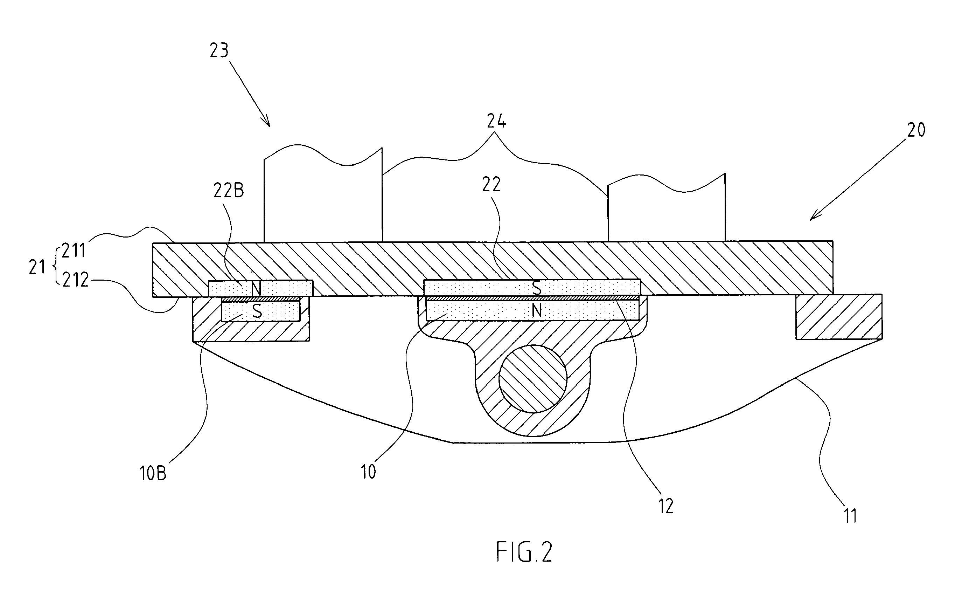

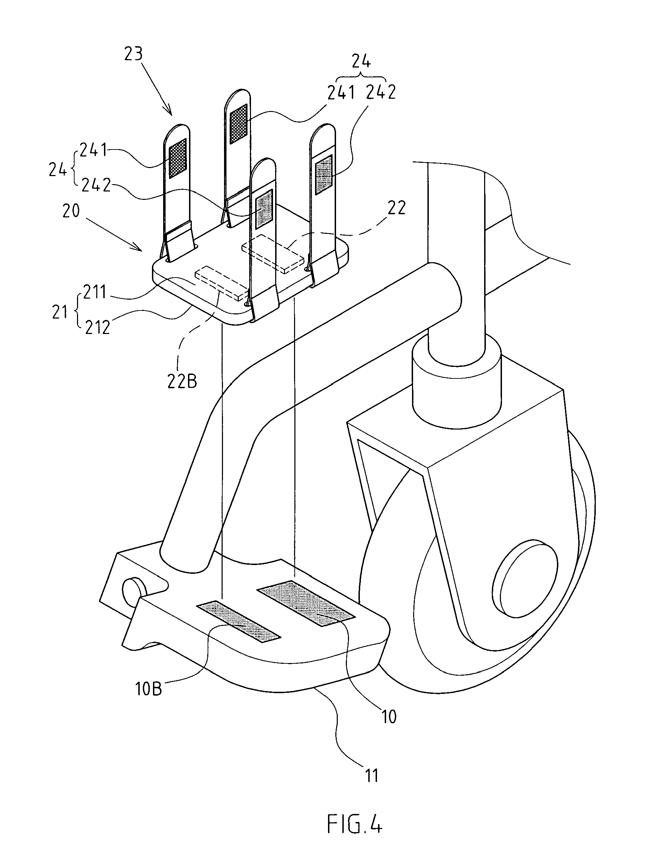

Referring to FIG. 2, when the permanent magnets 10, 22 of the vehicle pedal plate 11 and the attractive binder 20 are configured in multiple groups, the magnetic poles of each permanent magnet 10, 22 group can be configured in different status. For example, when the permanent magnet 10 of the vehicle pedal plate 11 has an upward n pole, while the other permanent magnet 10b has an upward s pole, corresponding to the permanent magnets 22, 22b of the attractive binder 20, a magnetic absorption binding status is realized. Referring to FIG. 4, the vehicle pedal plate 11 is formed in a style that can be applied to wheelchair pedals. The permanent magnet 10 is configured on the wheelchair pedal and matches the attractive binder 20, so that when the patient's feet or shoes are fixed onto the attractive binder 20, they can be magnetically absorbed by the permanent magnet 10 of the wheelchair pedal. Such a magnetic absorption and binding status makes it easier for the patient to get into or out of the wheelchair. Meanwhile, in case of emergency, the patient's feet can immediately separate from the pedal.

The aforementioned structure forms the design of the present invention. Below are descriptions of the usage status of the present invention:

Referring to FIGS. 1 and 3, firstly, the user's feet or shoes are fastened on the top surface 211 of the board 21 of attractive binder 20 through the quick release positioner 24 of the user foot binding structure 23, and are then put close to the vehicle pedal plate 11. As the permanent magnet 22 of the attractive binder 20 is fixed on the bottom surface 212 of the board 21, the vehicle pedal plate 11 will automatically turn to the usage surface. Through the magnetic attraction and repellence effect, the permanent magnet 22 of the attractive binder 20 is automatically absorbed to the permanent magnet 10 of the vehicle pedal plate 11, realizing a magnetic absorption status.

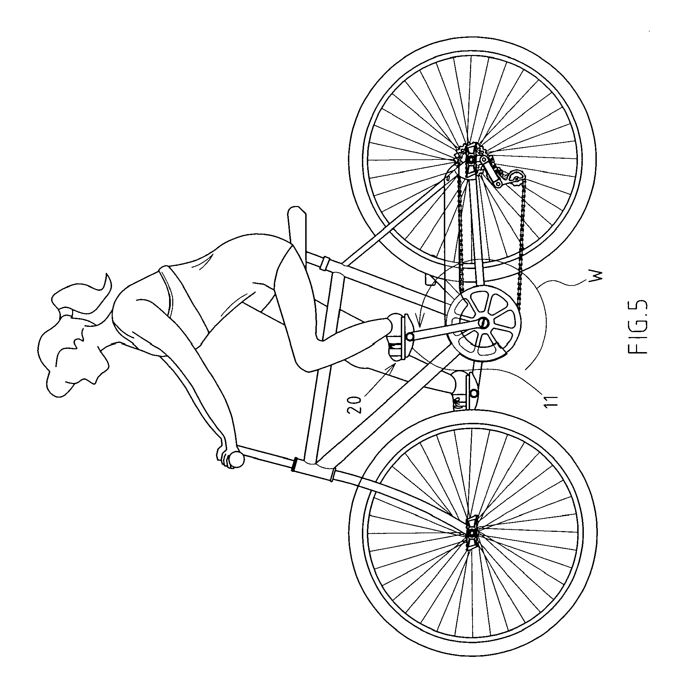

Referring to FIG. 5 for the illustration of the user riding status, just as the user treads downward to drive the vehicle pedal plate 11 and crank, when the user lifts up his/her feet, the magnetic pedal release and binding structure for vehicles will also drive the vehicle pedal plate 11 and crank (see w in the Figure), and will therefore enhance traveling efficiency and save physical power.

Moreover, commercially, said attractive binder 20 and vehicle pedal plate 11 can be sold as a whole, or the attractive binder 20 can be sold alone.

## Claims

1. A magnetic pedal release and binding structure for vehicles, comprising:
at least one permanent magnet, fixed at a preset position on the vehicle pedal plate; the permanent magnet is of ferromagnetic material, and the ferromagnetic material can be any of the chemical composition systems of neodymium-iron-boron (nb-fe-b), samarium cobalt -iron (smco-fe), or aluminum nickel cobalt - iron (alnico-fe);
an attractive binder, comprising a board, at least one permanent magnet and a user foot binding structure; therein, the board defines a top surface and a bottom surface; the permanent magnet is of ferromagnetic material, and the ferromagnetic material can be any of the chemical composition systems of neodymium-iron-boron (nb-fe-b), samarium cobalt -iron (smco-fe), or aluminum nickel cobalt - iron (alnico-fe); said permanent magnet is configured at a preset position on the bottom surface of the board, to match the permanent magnet of the vehicle pedal plate and realize a magnetic binding status; the user foot binding structure is configured on the top surface of the board, to bind and fix onto the user's foot or shoe; meanwhile, the user foot binding structure has a quick release positioner to facilitate shifting between the fixed status and released status.

2. The structure defined in Claim 1, wherein the permanent magnet on the vehicle pedal plate can be configured with an abrasion-proof material.

3. The structure defined in Claim 1, wherein when the permanent magnets of the vehicle pedal plate and the attractive binder are configured in multiple groups, the magnetic poles of each permanent magnet group can be configured in different status.

4. The structure defined in Claim 1, wherein the quick release positioner of said user foot binding structure can be made in any of these structures: male and female velcros, male and female buttons, magnets, or elastic bands.

5. The structure defined in Claim 1, wherein the permanent magnet of the attractive binder and the permanent magnet of the vehicle pedal plate can be configured with concave and convex parts for clasping.
